# EUROPEAN PATENT SPECIFICATION

(11) **EP 3 539 378 B1**
(45) Date of publication and mention of the grant of the patent: **13.03.2024**
(21) Application number: 19162910.4
(22) Date of filing: 14.03.2019
(51) Int. Cl.: A01M 21/04, A01M 15/00

(54) **THERMAL WEED DIFFUSER**
DIFFUSOR EINES THERMISCHEN UNKRAUTVERNICHTERS
DIFFUSEUR DE DÉSHERBEUR THERMIQUE

(30) Priority: 15.03.2018 FR 1852236; 15.03.2018 FR 1852237; 31.08.2018 GB 201814212
(43) Date of publication of application: 18.09.2019
(60) Divisional application: 24151976.8
(73) Proprietor: Exel Industries, 51200 Epernay (FR)
(72) Inventor: SCHWENTER, Sébastien, 75009 Paris (FR)
(74) Representative: CSY London

(56) References cited:
- EP-A1- 0 649 944
- EP-A1- 1 038 440
- WO-A1-2017/201637
- FR-A1- 2 823 644
- FR-A1- 2 841 633
- US-A- 6 029 589
- US-A1- 2017 290 325

## Description

The present invention relates to the technical field of thermal weeders.

The desire to limit the use of phytosanitary products and their consequences for the environment, promotes the idea of thermal weeding. A thermal weeder is an apparatus which makes it possible to produce hot air by means of a heat source, say electrical or by combustion, for example of gas, and to divert said hot air towards the plants to be destroyed. This hot air causes a thermal shock which ensures a deep destruction of said plants.

Known thermal weeders generally produce a hot air jet forming a narrow plume. This narrowness limits the maximum treatable area. This requires repositioning the device on small areas to be treated and consequently limits the achievable yield.

In some embodiments the present ideas address this drawback by proposing use of a diffuser which is adapted to expand the hot air jet to increase the treated area.

Another issue to consider is that for effective weed control, the temperature of the hot air should be sufficient, say approaching 500°C. A problem is that the heated air cools quickly after its production and during any diffusion.

One solution to this problem could be to increase the production temperature of the hot air. However weeders are currently typically built on the basis of existing modules say torches or heat scrapers and it is undesirable to change these.

Also this issue can limit the size of diffusers that may be used. The largest initially proposed diffuser has a conical shape with a useful opening (second aperture) which is circular with a diameter of at most 8 cm. This is binding on use, such a diameter defining a maximum treatable area of a surface at 50 cm². Thus even when a diffuser is provided this small surface area forces a user to constantly reposition the diffuser on small areas of 50 cm² and therefore limits the achievable yield.

In at least some embodiments of the present ideas these various drawbacks are addressed with the aim of making it possible to substantially increase the size of the zone which can be treated.

EP 1 038 440 A1 describes an apparatus for destroying unwanted vegetation by means of steam. This apparatus comprises an upwards closed and downwards open cover for moving across the unwanted vegetation in a travelling direction. It includes a steam discharge device for the diffuse discharge of steam under the cover.

US 2017/290325 A1 describes a weed removing tool which includes a tool body and a cover body arranged on an air outlet on the tool body. The cover body is provided with a support frame forming a heat dissipation gap between an opening and an object to be processed during operation.

According to one aspect of the present invention there is provided a thermal weeder diffuser for a thermal weeder according to claim 1.

The deflector may comprise at least one wall disposed substantially perpendicular to the axis.

The deflector may be circularly symmetric about the axis.

It has been recognised that if a deflector is or can be provided on the end of the weeder independently of a shield a danger can arise. The hot air may then be projected sideways in an uncontrolled fashion and injure a user.

When the thermal weeder diffuser is mounted on the weeder, the shield and the deflector are provided simultaneously and the above mentioned danger is avoided. Further given that the deflector is carried on the shield such that if the shield is removed from the weeder the deflector is also removed from the weeder, this facilitates the provision of a deflector that is selected to cooperate with shield on which it is carried to give desired performance - typically a desirable, say even, temperate distribution across the area to be treated.

The deflector and at least part of the shield may be formed of one piece of material.

The second opening may have a surface area of at least 50 cm².

The first opening may have a shape adapted to allow a removable assembly on a mouth of a weeder, preferably without tools.

The second opening may have a periphery lying in a plane, so that the periphery can be placed on the ground or another flat surface.

The second opening may have a periphery comprising at least one rectilinear segment.

The second opening may have a periphery comprising at least two rectilinear segments having between them an angle at most equal to 90°.

The diffuser may be arranged so that an axis of the first opening is not parallel to an axis of the second opening. The deflector may be arranged across an axis of the first opening. The deflector may comprise at least one wall substantially perpendicular to the axis of the first opening.

According to the invention, the shield has at least one exit opening, ie at least one third opening, defined in a wall of the shield for allowing exit of air from the interior of the shield after application to the area to be treated.

The shape and dimensions of the deflector and the location and dimensions of the at least one exit opening may be selected to provide, in use, an even temperature distribution, across the area to be treated.

According to the invention, the deflector has at least one aperture for allowing air from a weeder therethrough. This can help avoid the occurrence of cool spots/regions in the treatment area, say at locations below the deflector.

The at least one aperture may be provided towards the centre of the deflector.

The diffuser may further comprise limiting means capable of limiting the cooling of air inside the shield.

The limiter means may comprise a thermal insulator.

The limiter means may comprise at least one inner wall and at least one outer wall substantially parallel to each other.

The limiting means may further comprise features to induce an elongated circulation of the air in the diffuser.

The shield may comprise at least one inner wall and at least one outer wall substantially parallel to each other, and the exit opening may comprise at least an inner orifice pierced in the inner wall, at least one outer port pierced in the outer wall and at least one elongated circulation passage connecting the at least one inner orifice with said at least one outer orifice.

A grid may be provided at the second opening.

The grid may be recessed towards the inside of the diffuser.

The grid may comprise at least one substantially tubular protuberance extending towards the second opening.

According to a second aspect of the invention there is provided a thermal weeder assembly comprising a weeder and a thermal weeder diffuser as defined above. The weeder may preferably be of the electric type.

According to a third aspect of the invention there is provided a method of manufacturing a thermal weeder diffuser for a thermal weeder according to claim

Not all of the above features are repeated after each aspect merely in the interest of brevity.

Other characteristics, details and advantages of the invention will emerge more clearly from the detailed description given below as an indication in relation to drawings in which:
Figure 1a and 1b illustrates a weeder according to the prior art;
Figure 2 illustrates a weeder embodying the invention;
Figure 3 illustrates a first diffuser useful for understanding only partial aspects of the invention;
Figure 4 illustrates a second diffuser useful for understanding only partial aspects of the invention;
Figure 5 illustrates a third diffuser useful for understanding only partial aspects of the invention;
Figure 6 illustrates an example useful for understanding only partial aspects of the invention with a bell completing the diffuser;
Figure 7 shows a further embodiment with a diffuser detached from the end of the weeder;
Figures 8a and 8b show the embodiment of Figure 7 but with the diffuser mounted on the remainder of the weeder;
Figure 9 shows a section on line IX - IX of the weeder assembly shown in Figure 8b.
Figures 10a and 10b illustrate two embodiments of a weeder embodying the invention; and
Figures 11-14 illustrate, in profile cutaway, a diffuser according to different examples.

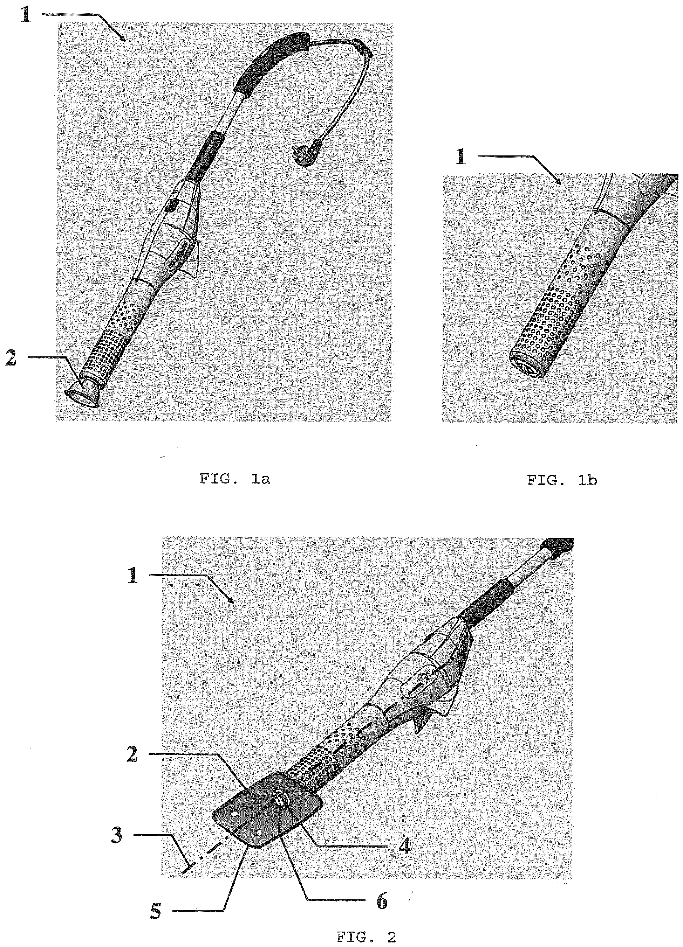

As illustrated in Figures 1a and 1b, show a thermal weeder 1 which produces hot air. Most often, according to an economical embodiment, the weeders make use of parts of existing hot air generators such as: blowtorches or heat scrapers. By their initial function, these generators produce hot air jets in a narrow plume and they do not have a diffuser 2 as shown in Figure 1b, or have only a narrow diffuser as shown in Figure 1a.

This does not prove the most effective in terms of weed control performance because of the low surface area treated surface.

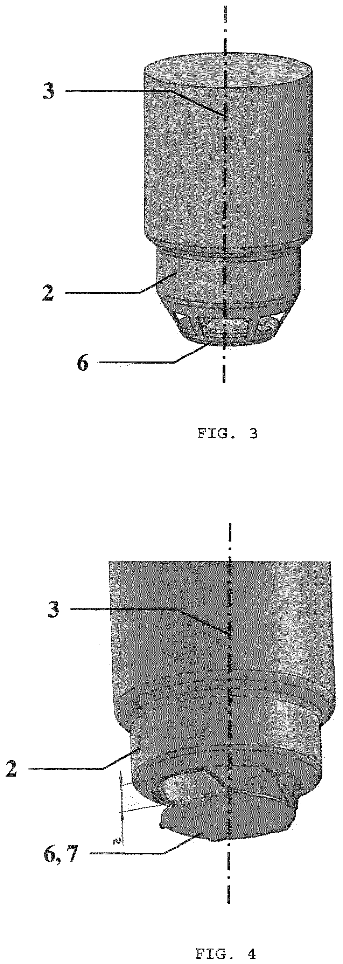

As illustrated in Figure 2, a thermal weeder 1 is advantageously equipped, at its hot air outlet mouth, with a diffuser 2. This diffuser 2 advantageously comprises at least one deflector 6 disposed across the jet of hot air, so as to deflect the hot air radially. Thus, the jet of hot air, which initially, in the absence of diffuser 2, was narrow and substantially aligned along an axis 3, is deflected by said at least one deflector 6 radially and is thus widened. The jet of hot air thus expanded can cover a larger area to be treated. The deflector 6 can have any shape. Figure 3, which is useful for understanding only partial aspects of the invention, illustrates a deflector 6 which is substantially conical.

Advantageously, in order to obtain an optimized deflection of the air jet, the deflector 6 comprises at least one wall 7 disposed substantially perpendicular to the axis 3. Thus the jet of hot air meets the wall 7 which deflects it radially. The wall 7 may have any shape. Figures 3, 4, 5 illustrate various characteristics useful for understanding only partial aspects of the invention.

According to what can be an advantageous characteristic, the deflector 6, and particularly the wall 7, are circularly symmetric. Thus, in such a case, the air jet is deflected radially and angularly substantially equally distributed all around the axis 3.

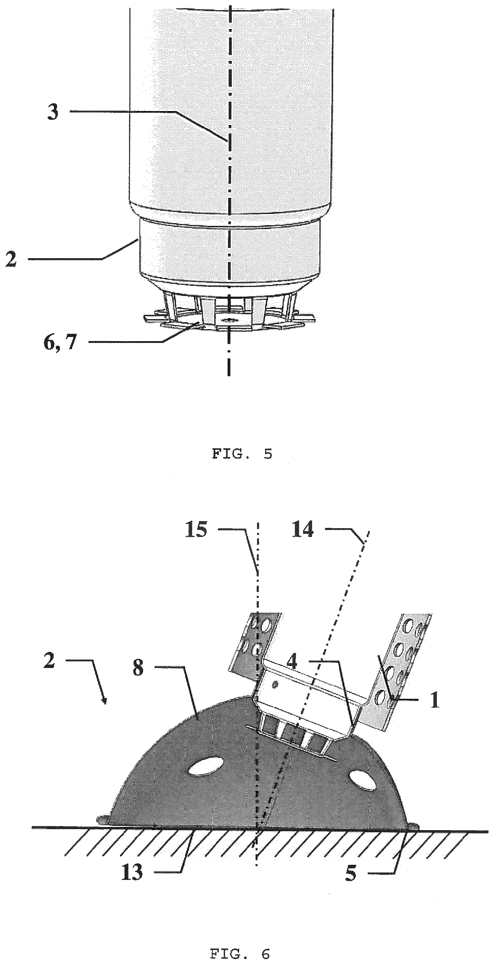

According to another characteristic, more particularly illustrated in Figure 6, the diffuser 2 further comprises a shield which can be termed a bell 8. This bell 8 is substantially closed, to the exclusion of a first opening 4 capable of allowing an inlet of air coming from the weeder 1 towards the interior of the bell 8 and a second opening 5 adapted to allow application of the heated air to an area to be treated. According to what can be an advantageous characteristic, said bell 8 surrounds the deflector 6. Thus combined with the deflector 6, the bell makes it possible to contain and to fold the air guiding it towards the second opening and thus towards the area to be treated. The combination of the bell 8 and the deflector 6 makes it possible to significantly increase the area of the zone to be treated.

Thus, contrary to the weeders of the prior art in which the effective treatment area did not exceed 5 cm², it is possible to realize a weeder 1 where the diffuser 2 has a second opening 5 with a surface at least equal to 50 cm². This represents a productivity gain of a factor of 10.

Advantageously, the first opening 4 has a shape adapted to allow a dismountable mounting on an air outlet mouth of the weeder 1, preferably without tools. This can be achieved by any known means, such as the techniques used to mount/dismount a diffuser on a heat gun or a scraper on a torch. Thus the diffuser 2 can be mounted and/or removed from the weeder 1. The first opening 4 - the weeder receiving opening - has an axis 14 that is parallel to the axis of the air jet of the weeder 1.

The second opening 5 is intended to be applied to the area to be treated, usually the ground. Also advantageously the second opening 5 has a planar contour (or a periphery that lies in a plane), so that it can be placed on the ground according to a laying plane 13. The bell 8 can thus be placed on the ground defining a treatment area. If the ground is substantially flat, the ground closes, substantially in a sealed manner, the bell 8 of the diffuser 2.

According to another characteristic, the second opening 5 has a contour or periphery comprising at least one rectilinear segment. This facilitates the treatment at a rectilinear border, allowing the diffuser 2 to be put closer to said border.

According to another characteristic, the second opening 5 has a contour or periphery comprising at least two rectilinear segments having between them an angle at most equal to 90°. This facilitates the treatment of a re-entrant corner between two rectilinear edges, allowing the diffuser 2 to be placed as close as possible to said corner.

It should be noted that the rectilinear segment may or may not form one of the two rectilinear segments. Thus the second opening 5 may, for example, have a triangular shape or a substantially rectangular one.

According to another characteristic, the axis 14 of the first opening 4, which is substantially aligned with the axis of the weeder 1, is not parallel to the axis 15 of the second opening 5. This means that the axis 14 of the weeder is not parallel to the axis 15 of the second opening. This allows easier handling of weeder 1 where its axis is not perpendicular to the plane 13 of the surface being treated.

The diffuser 2 can be made of any material. Given the temperatures used, preferably approaching or above say 500° C, preference is for use of metallic materials, particularly: steel, stainless steel, and aluminium but in some cases use of other materials might be desirable, say carbon fibre, reinforced plastic, composite materials etc.

The invention may be embodied in a diffuser or a thermal weeder 1 equipped with such a diffuser. The present ideas are particularly suitable for use with a thermal weeder 1 of the electric type.

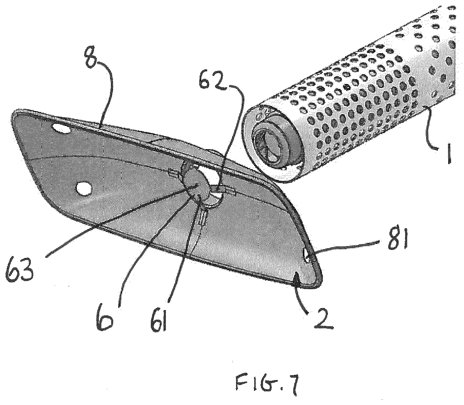

The weeder assembly shown in Figures 7 to 9 is similar to those described above, again there is a weeder 1 to which is mounted a diffuser 2. However, in the present embodiment the deflector 6 is carried by the shield or bell 8 of the diffuser 2.

In contrast, in the devices described above, as can be seen most clearly by considering, for example, Figure 6 the deflector 6 is mounted on the end of the weeder 1 and the shield/bell 8 is mounted separately over the component of which the deflector 6 forms a part. This might be achieved for example by the shield/bell being a one piece component with the deflector 6 part of the same piece of material as the remainder of the shield/bell 8 - as such there may be a single continuous piece of material forming the shield/bell 8 and the deflector 6. Alternatively, the deflector 6 may be mounted to the shield/bell 8 and preferably fixedly mounted thereto so as to resist and movement between the shield/bell 8 and the deflector 6.

This means that with the arrangement shown in, for example, Figure 6 above the shield/bell 8 may be removed whilst leaving the deflector 6 in place on the end of the weeder 1.

It has been found that this can be potentially dangerous since it means that with the deflector 6 in place, hot air will be projected radially out of the end of the weeder if it is operated and this might harm a user.

It has been realised that this issue can be avoided by ensuring the deflector 6 is carried by the shield/bell 8 such that if the shield/bell 8 is removed from the outlet end of the weeder 1, the deflector 6 is also so removed. In such a case once the shield/bell 8 and deflector 6 are removed, the weeder 1 will operate by outputting only an axial narrow jet of hot air.

This arrangement also means that the deflector 6 and shield/bell 8 can be designed together for optimal performance and removed and replaced as a unit. This in turn can allow different diffusers 2, of different sizes and shapes, to be used on one weeder 1 and each arranged for optimal performance.

In the present embodiment the deflector 6 comprises a generally circular deflecting disc 61 and at least one, in this case a plurality of, supporting legs 62 which have a first end connected to the deflecting disc 61 and a second end fixed to the field/bell 8. In the present embodiment the deflecting disc 61 and legs 62 are of a single piece of material and may, for example, be punched out of sheet metal. Further in the present embodiment the ends of the legs 62 are spot welded to the shield/bell 8. As will be appreciated other fixing methods may be used - such as the use of mechanical fastening means such as rivets or screws/bolts, or the use of adhesives including glues and/or tapes

In the present embodiment there are four supporting legs 62 although of course other numbers might be used. In the present embodiment a central aperture 63 is defined in the deflector disc 6 which is arranged to allow hot air from the weeder 1 outlet to pass through the deflector disc 61. The provision of the aperture 63 can help ensure that an even temperature distribution is obtained and in particular cold spots are not found in regions shielded by the deflector plate 61 - say central regions.

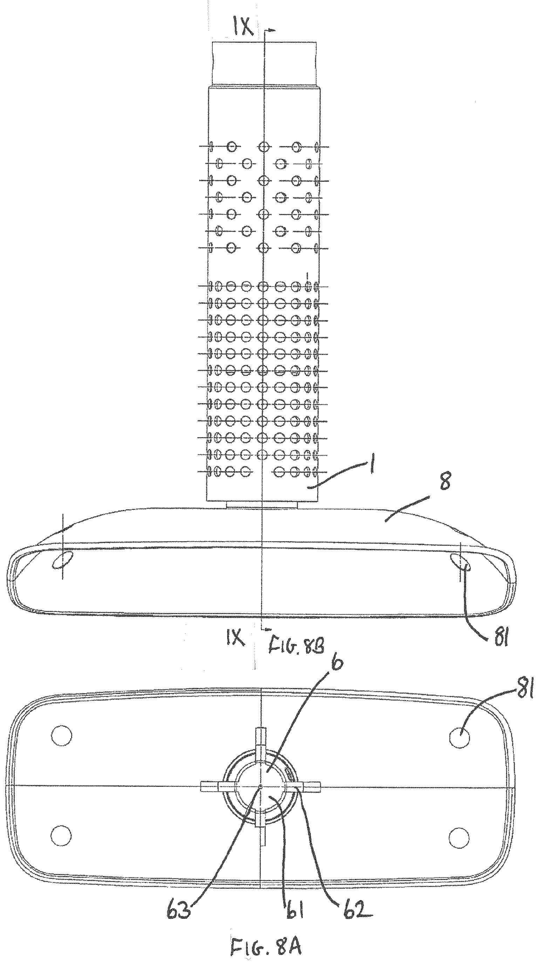

The shield/bell 8 has four exit openings 81 (all of which may be seen in Figure 8a). The dimensions and location of these exit apertures 81 as well as the dimensions and shape of the deflector 6 in particular the deflection disc 61 are selected in order to give a desired heat distribution across the area that may be treated by the weeder assembly - that is the area defined by the second opening 5.

In the present case it can be noted that the shield/bell 8 has a generally oblong shape and the exit openings 81 are provided towards the ends of the shield/bell 8 which are furthest from the axis 3 of the hot air jet, or to put this in another way furthest from the opening 4 receiving the outlet end of the weeder 1 and similarly furthest from a midpoint of the deflector 6. This tends to encourage the flow of air from the inlet 4 to the exit openings 81 such as to ensure that these regions further from the inlet experience a greater airflow and hence tend to reach a temperature which is similar to that reached at other regions of the second opening 5.

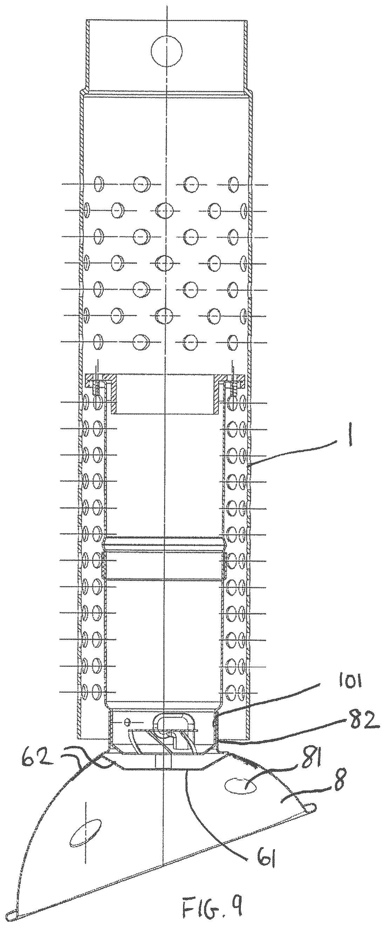

As illustrated in Figure 9 the nozzle 11 of the weeder 1 and a mounting collar 82 of the shield/bell 8 are provided with complimentary engaging portions to provide a bayonet type fit between the shield/bell 8 (in particular the mounting collar 82) and the weeder 1 (in particular the end of the nozzle 11). It has been found desirable to capture the shield/bell 8 on the end of the weeder 1 to avoid differences in thermal expansion and/or physical knocks to the shield/bell 8 from causing the shield/bell 8 from being accidentally removed from the end of the weeder 1. Other mechanisms, besides bayonet fittings, might be used for capturing the shield/bell 8 on the end of the weeder - say a screw fit, or one or more retaining clip and if desired a simple non-capturing push fit could be used.

The diffuser can be made of any material. Given the temperatures used, say up to or greater than 500 ° C, preference is given to metal materials, and particularly: steel, stainless steel, and aluminium, but in some cases use of other materials might be desirable, say carbon fibre, reinforced plastic, composite materials etc.

It might be noted that in this embodiment a deflector of some kind is provided inside the end of the nozzle 11 of the weeder 1. This is designed to cooperate with other features at the end of the nozzle 11 to produce the jet of air proceeding in an axial direction from the nozzle. These parts are distinct from the diffuser 2 and in particular distinct from the deflector 6 provided as part of the diffuser 2.

Below are described further weeder assemblies and diffusers as examples for understanding only partial aspects of the invention. The ideas below may be used in conjunction with any of the ideas/embodiments described above or separately therefrom.

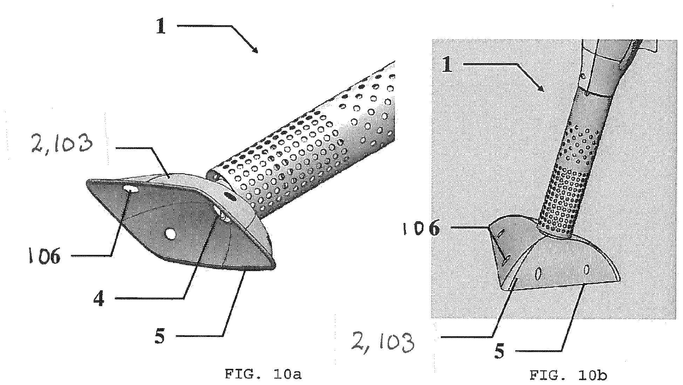

Again a thermal weeder 1 as shown in Figures 10a and 10b produces hot air and at the outlet mouth for this hot air, is disposed a diffuser 2, for applying said hot air to an area to be treated. This diffuser 2 comprises a hollow body 103. This body 103 corresponds to the shield/bell 8 in the examples described above. This body 103 is substantially closed to the exclusion of three openings 4-6. A first opening 4 is shaped to fit and allow the mounting of the diffuser 2 on the outlet mouth of the weeder 1. This assembly is substantially airtight. Although not mentioned above these features are also present in the embodiments and examples of Figures 2 to 9. The first opening 4 thus allows the air produced by the weeder 1 to enter the interior of the diffuser 2. A second opening 5 allows application of the diffuser 2 and therefore hot air on an area to be treated. At least one exit opening 106 allows the air out of the diffuser 2. In order to maintain the temperature of the hot air during use, the diffuser 2 further comprises a limiting means capable of limiting the cooling of the air.

Since this limiting means limits the cooling of the air, it can make it possible to increase the size of the diffuser 2 and particularly of its second opening 5 which determines the size of the treatable area.

According to a first characteristic, the limiting means comprises a thermal insulator 107. Such a thermal insulator 107 can be constituent of all or part of the body 103, arranged on the wall of the body 3 of the diffuser 2, over all or part of its inner face and/or its outer face. This insulator 107 can be of any type.

According to another characteristic, the limiter means comprises at least one inner wall 108 and at least one outer wall 109 substantially parallel to each other. Such an arrangement of the body 103 comprising at least two walls can have many advantages with regard to the problems under consideration.

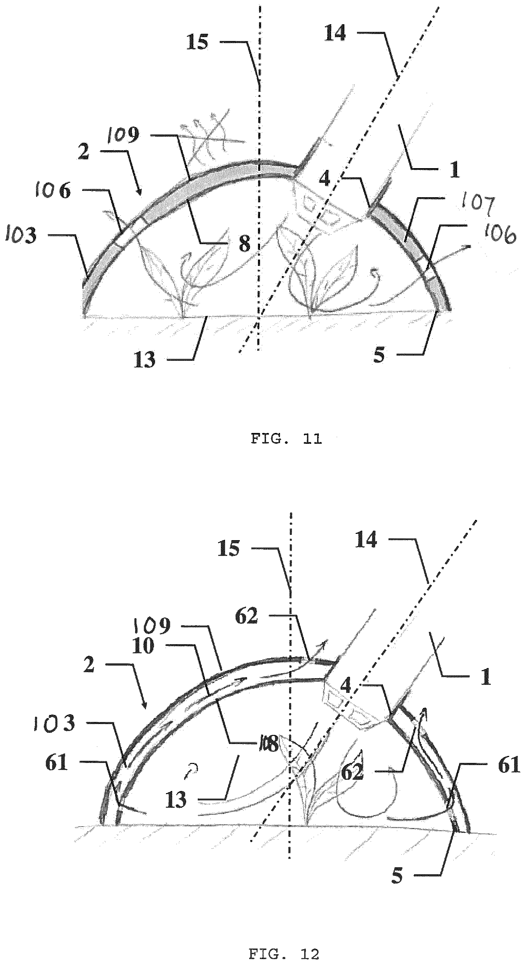

According to an embodiment illustrated in Figure 11, the space between the two walls 108, 109 contains air and thus forms an insulator which limits the cooling of the air. According to another embodiment, the space between the two walls 108, 109 is advantageously used to house an insulator 107, such as for example a foam-type insulator or a metal straw type.

According to another characteristic, the limitation is obtained by forcing the air to lengthen its circulation 10 in the diffuser 2. Circulation 10 can be performed in different ways and force the air to circulate longer in the chamber formed by the diffuser 2 or in the thickness of the diffuser 2.

Thus, according to another embodiment, more particularly illustrated in Figure 12, the body 103 comprises at least one inner wall 108 and at least one outer wall 109 substantially parallel to each other. According to an advantageous characteristic, the exit opening 106, which allows the exit of the air to the outside, is decomposed into at least one inner orifice 61 pierced in the inner wall 108 and at least one outer orifice 62 pierced in the outer wall 109. Said at least one inner orifice 61 is disposed relative to said at least one outer orifice 62 so as to form, between the two walls 108, 109, at least one elongated circulation 10 that is as long as possible. Thus the air during its outward exit is forced to linger in the thickness between the walls 108, 109 which on the one hand retards its cooling and on the other hand tends to heat the walls 108, 109, further reducing the cooling of the air contained in the diffuser 2.

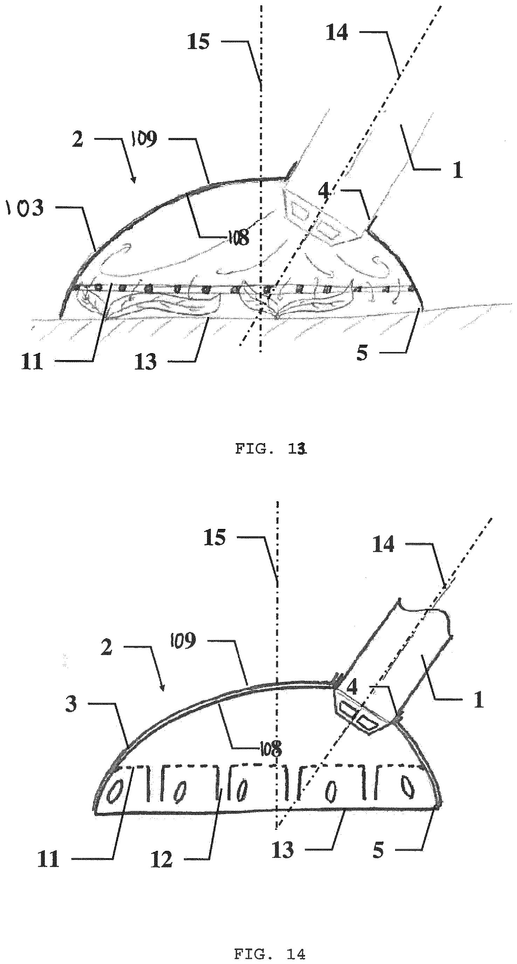

Another way to limit the cooling of the air is to promote its circulation by freeing a portion of the volume enveloped by the diffuser 2. Thus, as shown in Figure 13, to prevent the plants from occupying all the space enveloped by the diffuser 2 which may prevent a good flow of air in the diffuser 2, the second opening 5 may be closed by a grid 11. This grid 11 is able to rest on and to press the plants against the ground, preventing them from filling the entire interior volume of the diffuser 2. This promotes a better air circulation within the remaining volume, above the grid 11.

In order to leave a volume for the plants, without squeezing them too strongly, which would hinder the flow of air between the plants necessary to obtain the weeding effect, the grid 11 is advantageously withdrawn or recessed within the inside of the diffuser 2.

According to another characteristic, more particularly illustrated in Figure 14, the grid 11 may comprise at least one substantially tubular protuberance 12 extending towards the second opening 5. The purpose of this at least one tubular protuberance 12 is to provide a guide for the hot air to the heart of the plants, already pressed by the grid 11. These protuberances 12 typically start from the grid 11 and extend towards the plane 13 on which the diffuser 2 will lay in use. Advantageously their length is such that they do not reach said plane 13.

The previously described features can be combined with one another to improve the limitation of cooling.

By limiting the cooling of the air, an increase in the size of the diffuser 2 is facilitated while maintaining a temperature sufficient to effectively weed. Also, it can be possible in some cases to exceed the limit of the prior art and to achieve a diffuser 2 whose surface of the second opening is at least equal to 50 cm².

According to another characteristic, the first opening 4 has a shape capable of allowing a dismountable assembly on a mouth of a weeder 1, preferably without tools. This is achieved by any known means, such as the techniques used to mount/dismount a diffuser on a heat gun.

According to another characteristic, the second opening 5 has a plane outline - a periphery that lies in a plane. Thus the diffuser 2 can be placed on the ground thus delimiting an area to be treated. If the ground is substantially flat, the ground closes, substantially tightly, the diffuser chamber 2. This allows the definition of a laying plane 13, which merges advantageously with the ground.

According to another characteristic, the second opening 5 has a contour (or periphery) comprising at least one rectilinear segment. This facilitates the treatment of a rectilinear border, allowing the diffuser 2 to be put closer to said border. This is illustrated in Figures 10a, 10b.

According to another characteristic, the second opening 5 has a contour (or periphery) comprising at least two rectilinear segments having between them an angle at most equal to 90°. This facilitates the treatment of a re-entrant corner between two rectilinear edges, allowing the diffuser 2 to be placed as close as possible to said corner. This is illustrated in Figures 10a and 10b.

It should be noted that the rectilinear segment may or may not be one of the two rectilinear segments. Thus the second opening may have, for example, a triangular shape - see Figure 10b, or a substantially rectangular shape - see Figure 10a.

According to another characteristic, the axis 14 of the first opening 4 which is substantially aligned with the axis of the weeder, is not parallel to the axis 15 of the second opening 5. This allows the axis 14 of the weeder to not be parallel to the axis 15 of the second opening. This allows easy handling of the weeder where its axis 14 is not perpendicular to the laying plane 13.

The diffuser can be made of any material. Given the temperatures used, say up to or greater than 500°C, preference is given to metal materials, and particularly: steel, stainless steel, and aluminium but in some cases use of other materials might be desirable, say carbon fibre, reinforced plastic, composite materials etc.

As above these ideas may be embodied in a diffuser or a thermal weeder 1 equipped with such a diffuser. The ideas are particularly suitable for use with a thermal weeder 1 of the electric type.

## Claims

1. A thermal weeder diffuser (2) for a thermal weeder (1) which is capable of producing a jet of hot air along an axis (3), the thermal weeder diffuser comprising:
at least one deflector (6) arranged across the hot air jet axis, so as to deflect hot air radially; and
a shield (8) comprising a first opening (4) adapted to allow ingress of air from the weeder (1) to the inside of the shield (8) and a second opening (5) adapted to allow application of said air to an area to be treated;
wherein the deflector (6) is carried on the shield (8) such that if the shield (8) is removed from the weeder (1) the deflector (6) is also removed from the weeder (1), the shield (8) surrounds the deflector (6), and the deflector (6) has at least one aperture (63) for allowing air from a weeder (1) outlet to pass therethrough to ensure even temperature distribution in central regions shielded by the deflector, **characterised in that** the shield further comprises at least one exit opening (81,106) defined in a wall of the shield (8) for allowing exit of air from the interior of the shield (8) after application to the area to be treated, wherein the at least one exit opening (81, 106) is provided towards an end of the shield which is furthest from the axis of the air jet.

2. A diffuser (2) according to claim 1, wherein the deflector (6) comprises at least one wall (7) disposed substantially perpendicular to the axis (3).

3. A diffuser (2) according to claim 1 or 2, wherein the deflector (6) is circularly symmetric about the axis (3).

4. A diffuser (2) according to any one of claims 1 to 3, wherein the second opening (5) has a surface area of at least 50 cm².

5. A diffuser (2) according to any one of claims 1 to 4, wherein the first opening (4) has a shape adapted to allow a removable assembly on a mouth of a weeder (1), preferably without tools.

6. A diffuser (2) according to any one of claims 1 to 5, wherein the second opening (5) has a periphery lying in a plane, so that the periphery can be placed on the ground or another flat surface.

7. A diffuser (2) according to any one of claims 1 to 6, wherein the second opening (5) has a periphery comprising at least one rectilinear segment, and preferably at least two rectilinear segments having between them an angle at most equal to 90°.

8. A diffuser (2) according to any one of claims 1 to 7, wherein an axis (14) of the first opening (4) is not parallel to an axis (15) of the second opening (5).

9. A diffuser (2) according to claim 1 in which shape and dimensions of the deflector (6) and the location and dimensions of the at least one exit opening (81,106) are selected to provide, in use, an even temperature distribution, across the area to be treated.

10. A diffuser (2) according to any one of the preceding claims, wherein the diffuser (2) further comprises a thermal insulator capable of limiting the cooling of air inside the shield (8).

11. A diffuser (2) according to claim 10, wherein the thermal insulator comprises at least one inner wall (108) and at least one outer wall (109) substantially parallel to each other.

12. A diffuser (2) according to claim 10 or 11, wherein the shield comprises at least one inner wall (108) and at least one outer wall (109) substantially parallel to each other, and the exit opening comprises at least an inner orifice (61) pierced in the inner wall (108), at least one outer port (62) pierced in the outer wall (109) and at least one elongated circulation passage connecting the at least one inner orifice (61) with said at least one outer port (62).

13. A diffuser (2) according to any one of the preceding claims, wherein a grid (11) is provided at the second opening (5), preferably the grid (11) is recessed towards the inside of the diffuser (2) and/or the grid comprises at least one substantially tubular protuberance (12) extending towards the second opening (5).

14. A weeder assembly comprising a weeder (1) and a diffuser (2) according to any preceding claim, the weeder being of the electric type.

15. A method of manufacturing a thermal weeder diffuser for a thermal weeder (1) according to claim 1;
the method comprising the steps of:
selecting the shape and dimensions of the deflector (6) to provide, in use, an even temperature distribution, across the area to be treated;
selecting the location and dimensions of the at least one exit opening (81,106) in combination with the shape and dimensions of the deflector (6) to provide, in use, an even temperature distribution, across the area to be treated;
providing the deflector (6) with at least one aperture for allowing air from a weeder (1) outlet to pass therethrough to ensure even temperature distribution in central regions shielded by the deflector.

## Patentansprüche

1. Thermo-Unkrautvernichter-Diffusor (2) für einen Thermo-Unkrautvernichter (1), der in der Lage ist, einen Strahl heißer Luft entlang einer Achse (3) zu erzeugen, wobei der Thermo-Unkrautvernichter-Diffusor Folgendes umfasst:
mindestens eine Prallplatte (6), die über die Heißluftstrahlachse hinweg angeordnet ist, um Heißluft radial abzulenken; und
eine Abschirmung (8), umfassend eine erste Öffnung (4), die dazu angepasst ist, den Eintritt von Luft von dem Unkrautvernichter (1) zum Inneren der Abschirmung (8) zu ermöglichen, und eine zweite Öffnung (5), die dazu angepasst ist, das Anwenden der Luft auf ein zu behandelndes Gebiet zu ermöglichen;
wobei die Prallplatte (6) derart an der Abschirmung (8) getragen wird, dass, wenn die Abschirmung (8) von dem Unkrautvernichter (1) abgenommen wird, die Prallplatte (6) ebenfalls von dem Unkrautvernichter (1) abgenommen wird, wobei die Abschirmung (8) die Prallplatte (6) umgibt und die Prallplatte (6) mindestens ein Loch (63) aufweist, um Luft von einem Auslass des Unkrautvernichters (1) dadurch hindurch gelangen zu lassen, um eine gleichmäßige Temperaturverteilung in durch die Prallplatte abgeschirmten mittleren Bereichen sicherzustellen, **dadurch gekennzeichnet, dass** die Abschirmung ferner mindestens eine in einer Wand der Abschirmung (8) definierte Austrittsöffnung (81, 106) umfasst, um den Austritt von Luft von dem Inneren der Abschirmung (8) nach der Anwendung auf das zu behandelnde Gebiet zu ermöglichen, wobei die mindestens eine Austrittsöffnung (81, 106) in Richtung eines am weitesten von der Achse des Luftstrahls entfernten Endes der Abschirmung bereitgestellt ist.

2. Diffusor (2) nach Anspruch 1, wobei die Prallplatte (6) mindestens eine Wand (7) umfasst, die im Wesentlichen senkrecht zu der Achse (3) angeordnet ist.

3. Diffusor (2) nach Anspruch 1 oder 2, wobei die Prallplatte (6) um die Achse (3) rotationssymmetrisch ist.

4. Diffusor (2) nach einem der Ansprüche 1 bis 3, wobei die zweite Öffnung (5) einen Flächeninhalt von mindestens 50 cm² aufweist.

5. Diffusor (2) nach einem der Ansprüche 1 bis 4, wobei die erste Öffnung (4) eine Form aufweist, die dazu angepasst ist, eine abnehmbare Montage an einer Mündung eines Unkrautvernichters (1), vorzugsweise ohne Werkzeuge, zu ermöglichen.

6. Diffusor (2) nach einem der Ansprüche 1 bis 5, wobei die zweite Öffnung (5) einen in einer Ebene liegenden Umfangsrand aufweist, sodass der Umfangsrand auf den Boden oder eine andere flache Oberfläche platziert werden kann.

7. Diffusor (2) nach einem der Ansprüche 1 bis 6, wobei die zweite Öffnung (5) einen Umfangsrand aufweist, der mindestens ein geradliniges Segment und vorzugsweise mindestens zwei geradlinige Segmente mit einem Winkel dazwischen von höchstens gleich 90° umfasst.

8. Diffusor (2) nach einem der Ansprüche 1 bis 7, wobei eine Achse (14) der ersten Öffnung (4) nicht parallel zu einer Achse (15) der zweiten Öffnung (5) ist.

9. Diffusor (2) nach Anspruch 1, wobei Form und Abmessungen der Prallplatte (6) und Lage und Abmessungen der mindestens einen Austrittsöffnung (81, 106) dazu ausgewählt sind, im Einsatz eine gleichmäßige Temperaturverteilung über das zu behandelnde Gebiet hinweg bereitzustellen.

10. Diffusor (2) nach einem der vorangehenden Ansprüche, wobei der Diffusor (2) ferner einen Wärmeisolator umfasst, der in der Lage ist, das Abkühlen von Luft innerhalb der Abschirmung (8) zu begrenzen.

11. Diffusor (2) nach Anspruch 10, wobei der Wärmeisolator mindestens eine innere Wand (108) und mindestens eine äußere Wand (109) umfasst, die im Wesentlichen parallel zueinander sind.

12. Diffusor (2) nach Anspruch 10 oder 11, wobei die Abschirmung mindestens eine innere Wand (108) und mindestens eine äußere Wand (109) umfasst, die im Wesentlichen parallel zueinander sind, und die Austrittsöffnung mindestens einen in die innere Wand (108) gestochenen inneren Durchlass (61), mindestens einen in die äußere Wand (109) gestochenen äußeren Mundloch (62) und mindestens einen langgestreckten Umwälzkanal, der den mindestens einen inneren Durchlass (61) mit dem mindestens einen äußeren Mundloch (62) verbindet, umfasst.

13. Diffusor (2) nach einem der vorangehenden Ansprüche, wobei an der zweiten Öffnung (5) ein Gitter (11) bereitgestellt ist, das Gitter (11) vorzugsweise in Richtung des Inneren des Diffusors (2) zurückgesetzt ist und/oder das Gitter mindestens einen im Wesentlichen röhrenförmigen Vorsprung (12) umfasst, der sich in Richtung der zweiten Öffnung (5) erstreckt.

14. Unkrautvernichteranordnung, umfassend einen Unkrautvernichter (1) und einen Diffusor (2) nach einem der vorangehenden Ansprüche, wobei der Unkrautvernichter der elektrischen Art ist.

15. Verfahren zum Herstellen eines Thermo-Unkrautvernichter-Diffusors für einen Thermo-Unkrautvernichter (1) nach Anspruch 1;
wobei das Verfahren folgende Schritte umfasst:
Auswählen von Form und Abmessungen der Prallplatte (6), um im Einsatz eine gleichmäßige Temperaturverteilung über das zu behandelnde Gebiet hinweg bereitzustellen;
Auswählen von Lage und Abmessungen der mindestens einen Austrittöffnung (81,106) in Kombination mit Form und Abmessungen der Prallplatte (6), um im Einsatz eine gleichmäßige Temperaturverteilung über das zu behandelnde Gebiet hinweg bereitzustellen;
Versehen der Prallplatte (6) mit mindestens einem Loch, um Luft von einem Auslass des Unkrautvernichters (1) dadurch hindurch gelangen zu lassen, um eine gleichmäßige Temperaturverteilung in durch die Prallplatte abgeschirmten mittleren Bereichen sicherzustellen.

## Revendications

1. Diffuseur de désherbage thermique (2) pour un appareil de désherbage thermique (1) qui est en mesure de produire un jet d'air chaud le long d'un axe (3), le diffuseur de désherbage thermique comportant :
au moins un déflecteur (6) agencé en travers de l'axe du jet d'air chaud, de manière à faire dévier l'air chaud dans le sens radial ; et
un écran de protection (8) comportant une première ouverture (4) adaptée pour permettre une entrée d'air en provenance de l'appareil de désherbage (1) vers l'intérieur de l'écran de protection (8) et une deuxième ouverture (5) adaptée pour permettre l'application dudit air sur une zone à traiter ;
dans lequel le déflecteur (6) est porté sur l'écran de protection (8) de telle sorte que, si l'écran de protection (8) est retiré de l'appareil de désherbage (1), le déflecteur (6) est également retiré de l'appareil de désherbage (1), l'écran de protection (8) entoure le déflecteur (6), et le déflecteur (6) a au moins une ouverture (63) permettant à l'air en provenance d'une sortie d'un appareil de désherbage (1) de passer à travers celle-ci afin d'assurer une distribution uniforme de la température dans les régions centrales protégées par le déflecteur, **caractérisé en ce que** l'écran de protection comporte par ailleurs au moins une ouverture de sortie (81, 106) définie dans une paroi de l'écran de protection (8) pour permettre la sortie de l'air en provenance de l'intérieur de l'écran de protection (8) après application sur la zone à traiter, dans lequel ladite au moins une ouverture de sortie (81, 106) est mise en oeuvre vers une extrémité de l'écran de protection qui est la plus éloignée de l'axe du jet d'air.

2. Diffuseur (2) selon la revendication 1, dans lequel le déflecteur (6) comporte au moins une paroi (7) disposée de manière sensiblement perpendiculaire par rapport à l'axe (3).

3. Diffuseur (2) selon la revendication 1 ou la revendication 2, dans lequel le déflecteur (6) est symétrique de manière circulaire autour de l'axe (3).

4. Diffuseur (2) selon l'une quelconque des revendications 1 à 3, dans lequel la deuxième ouverture (5) a une surface d'au moins 50 cm².

5. Diffuseur (2) selon l'une quelconque des revendications 1 à 4, dans lequel la première ouverture (4) a une forme adaptée pour permettre un assemblage amovible sur une embouchure d'un appareil de désherbage (1), de préférence sans outils.

6. Diffuseur (2) selon l'une quelconque des revendications 1 à 5, dans lequel la deuxième ouverture (5) a une périphérie reposant dans un plan, de telle sorte que la périphérie peut être placée sur le sol ou sur une autre surface plate.

7. Diffuseur (2) selon l'une quelconque des revendications 1 à 6, dans lequel la deuxième ouverture (5) a une périphérie comportant au moins un segment rectiligne, et de préférence au moins deux segments rectilignes ayant entre eux un angle au plus égal à 90°.

8. Diffuseur (2) selon l'une quelconque des revendications 1 à 7, dans lequel un axe (14) de la première ouverture (4) n'est pas parallèle à un axe (15) de la deuxième ouverture (5).

9. Diffuseur (2) selon la revendication 1, dans lequel la forme et les dimensions du déflecteur (6) et l'emplacement et les dimensions de ladite au moins une ouverture de sortie (81, 106) sont sélectionnés pour fournir, lors de l'utilisation, une distribution uniforme de la température en travers de toute la zone à traiter.

10. Diffuseur (2) selon l'une quelconque des revendications précédentes, dans lequel le diffuseur (2) comporte par ailleurs un isolant thermique en mesure de limiter le refroidissement de l'air à l'intérieur de l'écran de protection (8).

11. Diffuseur (2) selon la revendication 10, dans lequel l'isolant thermique comporte au moins une paroi intérieure (108) et au moins une paroi extérieure (109) sensiblement parallèles l'une par rapport à l'autre.

12. Diffuseur (2) selon la revendication 10 ou la revendication 11, dans lequel l'écran de protection comporte au moins une paroi intérieure (108) et au moins une paroi extérieure (109) sensiblement parallèles l'une par rapport à l'autre, et l'ouverture de sortie comporte au moins un orifice intérieur (61) percé dans la paroi intérieure (108), au moins un orifice extérieur (62) percé dans la paroi extérieure (109) et au moins un passage de circulation allongé reliant ledit au moins un orifice intérieur (61) audit au moins un orifice extérieur (62).

13. Diffuseur (2) selon l'une quelconque des revendications précédentes, dans lequel une grille (11) est mise en oeuvre au niveau de la deuxième ouverture (5), de préférence la grille (11) est en retrait vers l'intérieur du diffuseur (2) et/ou la grille comporte au moins une protubérance sensiblement tubulaire (12) s'étendant vers la deuxième ouverture (5).

14. Ensemble formant appareil de désherbage comportant un appareil de désherbage (1) et un diffuseur (2) selon l'une quelconque des revendications précédentes, l'appareil de désherbage étant du type électrique.

15. Procédé de fabrication d'un diffuseur de désherbage thermique pour un appareil de désherbage thermique (1) selon la revendication 1 ;
le procédé comportant les étapes consistant à :
sélectionner la forme et les dimensions du déflecteur (6) pour fournir, lors de l'utilisation, une distribution uniforme de la température en travers de toute la zone à traiter ;
sélectionner l'emplacement et les dimensions de ladite au moins une ouverture de sortie (81, 106) en combinaison avec la forme et les dimensions du déflecteur (6) pour fournir, lors de l'utilisation, une distribution uniforme de la température en travers de toute la zone à traiter ;
doter le déflecteur (6) d'au moins une ouverture permettant à l'air en provenance d'une sortie d'un appareil de désherbage (1) de passer à travers celle-ci afin d'assurer une distribution uniforme de la température dans les régions centrales protégées par le déflecteur.
